# EUROPÄISCHE PATENTANMELDUNG

(11) **EP 0 547 431 A1**
(43) Veröffentlichungstag der Anmeldung: **23.06.1993**
(21) Anmeldenummer: 92120529.0
(22) Anmeldetag: 02.12.1992
(51) Int. Cl.: C09B 69/04, C09B 45/16, C09D 11/00

(54) **Flüssige Präparationen eines 2:1-Chromkomplex-Farbstoffs**

(30) Priorität: 18.12.1991 DE 4141761
(71) Anmelder: BASF Aktiengesellschaft, D-67063 Ludwigshafen (DE)
(72) Erfinder: Dyllick-Brenzinger, Rainer, Dr., W-6940 Weinheim (DE); Hartmann, Heinz, W-6719 Bobenheim (DE); Bermes, Rudolf, Dr., W-6700 Ludwigshafen (DE)

(57) **Zusammenfassung**

Farbstoffpräparationen, enthaltend den Farbstoff der Formel 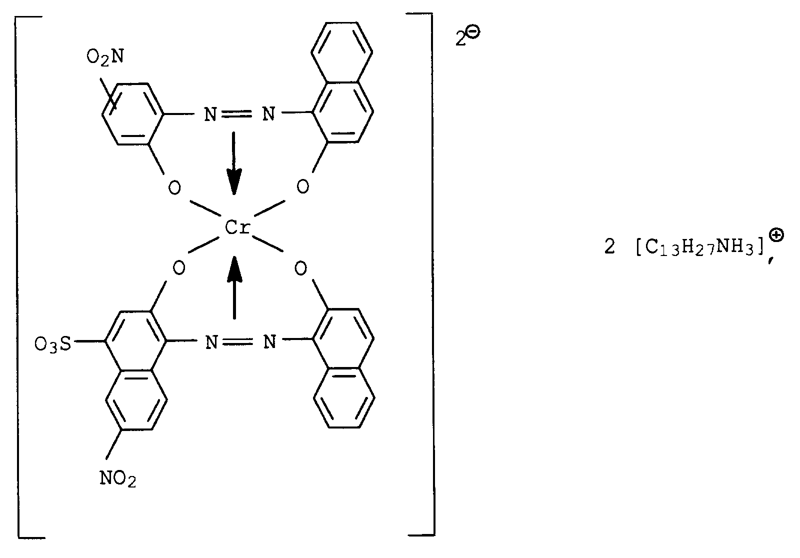
ein oder mehrere aliphatische Amine und Ethanol, sowie ihre Verwendung für das Ink-Jet-Verfahren.

## Beschreibung

Die vorliegende Erfindung betrifft neue Farbstoffpräparationen, enthaltend 1 bis 50 Gew.-%, bezogen auf das Gewicht der Präparation, des Farbstoffs der Formel 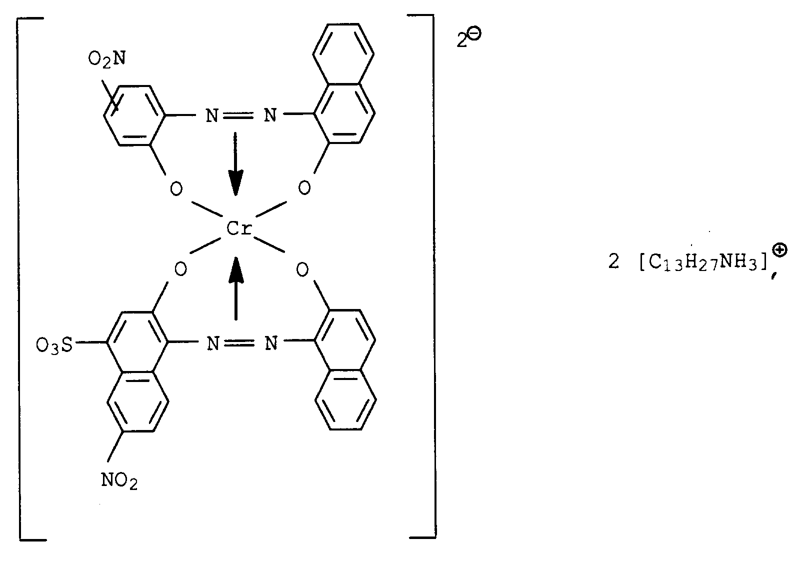
0,1 bis 10 Gew.-%, bezogen auf das Gewicht der Präparation, eines oder mehrerer primärer, sekundärer oder tertiärer aliphatischer Amine und 40 bis 98,9 Gew.-%, bezogen auf das Gewicht der Präparation, an Ethanol, sowie ihre Anwendung.

Aus der JP-A-276 871/1990 sind Tinten für das Ink-Jet-Verfahren bekannt. Bei den Farbmitteln handelt es sich dabei um Mischungen von Rhodaminfarbstoffen mit Chromkomplexfarbstoffen. Als weitere Komponenten enthalten die dort beschriebenen Tinten noch Amine und ein p-Hydroxybenzoesäurederivat. Es hat sich jedoch gezeigt, daß diese Tinten unbefriedigende anwendungstechnische Eigenschaften, insbesondere eine nicht ausreichende Lagerstabilität in Flüssigformulierung aufweisen.

Aufgabe der vorliegenden Erfindung war es daher, neue flüssige Farbstoffpräparationen eines 2:1-Chromkomplex-Farbstoffs bereitzustellen, die über eine gute Lagerstabilität verfügen.

Demgemäß wurden die eingangs näher bezeichneten Farbstoffpräparationen gefunden.

Der Farbstoff liegt dabei in der Regel als Mischung der 5-Nitroverbindung der Formel 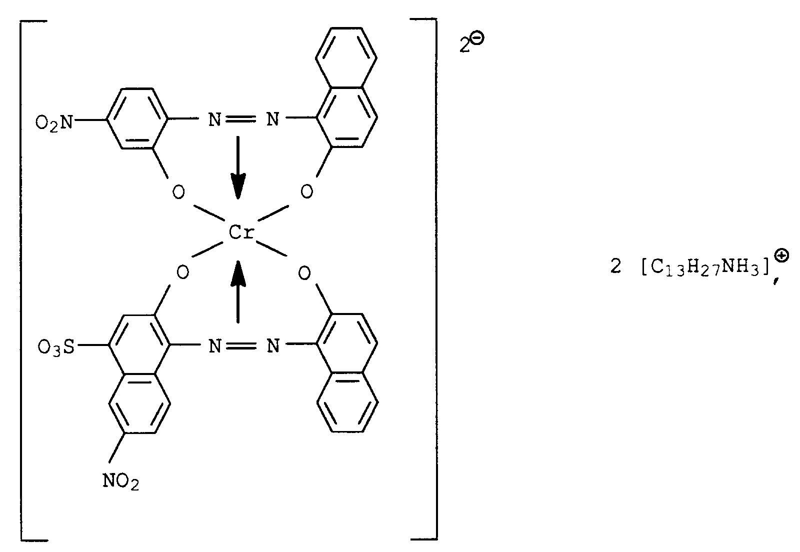
sowie der 4-Nitroverbindung der Formel 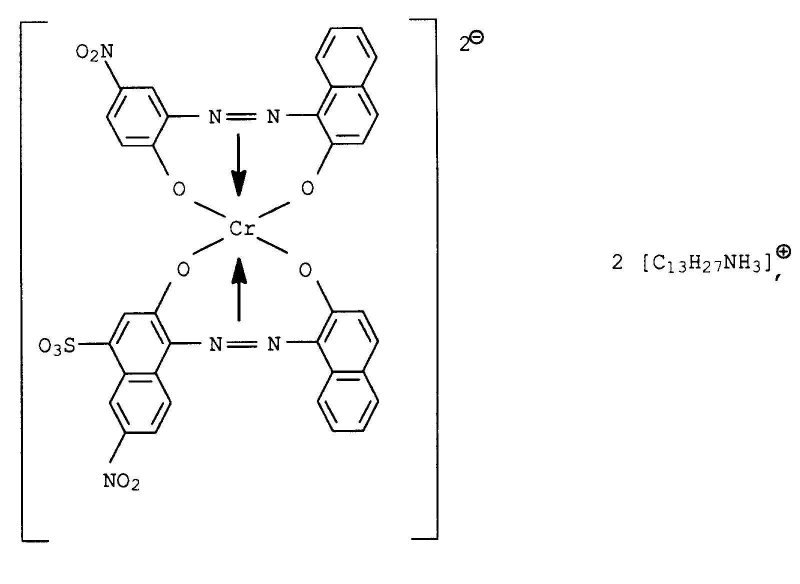
vor. Er kann nach der in der GB-A-1 028 409 beschriebenen Methode erhalten werden.

Der Farbstoff liegt als Tridecylaminsalz vor. Im erfindungsgemäßen Sinne ist dabei sowohl das n-Tridecylaminsalz als auch das Isotridecylaminsalz zu verstehen (Isotridecyl wird unten näher definiert).

Die erfindungsgemäß zur Anwendung kommenden aliphatischen Amine sind entweder primäre, sekundäre oder tertiäre Amine. Sie weisen mindestens 8 Kohlenstoffatome im Molekül auf und stammen vorzugsweise aus der Reihe der Alkylamine.

Hervorzuheben sind Alkylamine, die 8 bis 40, vorzugsweise 10 bis 30 und insbesondere 14 bis 20 Kohlenstoffatome im Molekül aufweisen.

Geeignete primäre Amine sind z.B. Octylamin, 2-Ethylhexylamin, Isooctylamin, Nonylamin, Isononylamin, Decylamin, Isodecylamin, Undecylamin, Dodecylamin, Tridecylamin, Isotridecylamin, (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecylamin, Pentadecylamin, Hexadecylamin, Heptadecylamin, Octadecylamin, Nonadecylamin oder Eicosylamin.

Geeignete sekundäre Amine sind z.B. Dibutylamin, Diisobutylamin, N-Ethyl-N-(2-ethylhexylamin), Bis(2-ethylhexyl)amin oder Diisotridecylamin.

Geeignete tertiäre Amine sind z.B. Tributylamin, N,N-Dimethyl-N-(2-ethylhexyl)amin, N,N-Dimethyl-N-C₁₀/C₁₈-alkylamin (Gemisch), Tris(2-ethylhexylamin) oder Triisotridecylamin.

Aufgrund der folgenden Gleichgewichtsreaktion können die primären, sekundären oder tertiären aliphatischen Amine (in der Gleichung mit dem Strukturelement 〉̶N dargestellt) ganz oder teilweise auch in Form ihrer Aminsalze vorliegen: 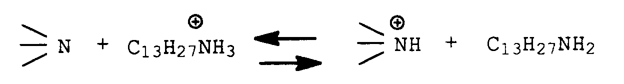
Die erfindungsgemäßen Farbstoffpräparationen enthalten 1 bis 50 Gew.-%, vorzugsweise 30 bis 40 Gew.-%, jeweils bezogen auf das Gewicht der Präparation, des Farbstoffs.

Weiterhin enthalten die neuen Farbstoffpräparationen 0,1 bis 10 Gew.-%, vorzugsweise 4 bis 8 Gew.-%, jeweils bezogen auf das Gewicht der Präparation, eines oder mehrerer primärer, sekundärer oder tertiärer aliphatischer Amine.

Weiterhin enthalten die neuen Farbstoffpräparationen 40 bis 98,9 Gew.-%, vorzugsweise 52 bis 66 Gew.-%, jeweils bezogen auf das Gewicht der Präparation, an Ethanol.

Weitere Bestandteile der erfindungsgemäßen Farbstoffpräparationen können z.B. Hilfsmittel, wie Leitsalze oder Fungizide, sein. Der Anteil dieser Komponenten liegt in der Regel bei 0 bis 10 Gew.-%, vorzugsweise 0 bis 5 Gew.-%, jeweils bezogen auf das Gewicht der Präparation.

Die erfindungsgemäßen Farbstoffpräparationen können z.B. erhalten werden, indem man den Farbstoff zusammen mit dem Amin oder einem Amingemisch und gegebenenfalls den Hilfsmitteln in den oben aufgeführten Verhältnissen in Ethanol löst.

Die neuen Farbstoffpräparationen eignet sich in vorteilhafter Weise zur Anwendung im Ink-Jet-Verfahren.

Das Ink-Jet-Verfahren ist an sich bekannt. Dabei werden Tröpfchen einer Schreibflüssigkeit (Tinte) aus einer oder mehreren kleinen Düsen gezielt auf einen Träger, z.B. auf Papier, Holz, Textilien, Kunststoff oder Metall, geschossen. Durch elektronische Aussteuerung werden die einzelnen Tröpfchen zu Schriftzeichen oder graphischen Mustern zusammengefaßt.

Weiterhin eignen sich die erfindungsgemäßen Farbstoffpräparationen als Markierflüssigkeit in Schreibgeräten oder als Basis für Beschichtungsmassen, z.B. Holzbeizen, Druckfarben, Farbbandfarben, Stempelfarben oder Kugelschreiberpasten.

Die erfindungsgemäßen Präparationen verfügen über vorteilhafte Lagerstabilität.

Das folgende Beispiel soll die Erfindung näher erläutern.

### Beispiel

2 g Bis(2-Ethylhexyl)amin wurden in 68 g Ethanol (99,5 gew.-%ig) gelöst. Dazu wurden 30 g des Farbstoffs der Formel 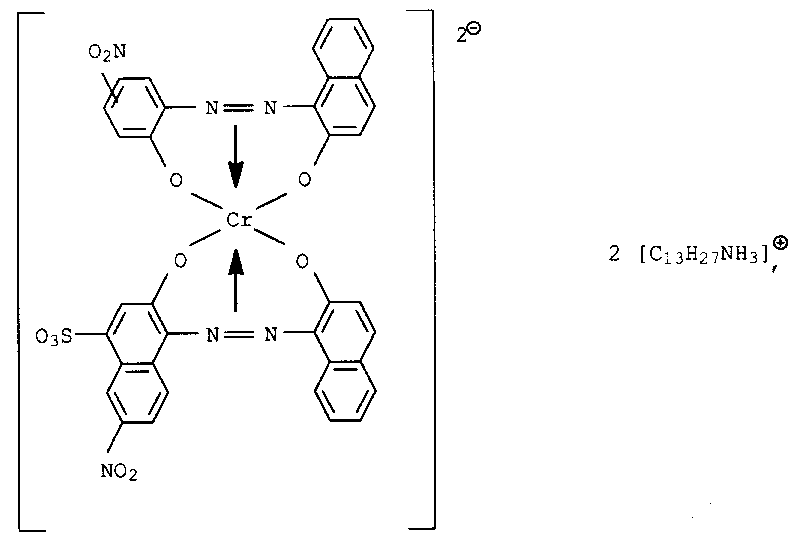
(der Farbstoff liegt dabei, wie oben ausgeführt, als Isomerengemisch vor) unter Rühren eingetragen und bei Raumtemperatur während 2 Stunden gelöst. Dann gab man 10 g eines Filtrierhilfsmittels auf Basis von Kieselgur zu und filtrierte durch eine Druckpresse.

Die so erhaltene flüssige Farbstoffpräparation war frei von kristallinen Bestandteilen, was durch Mikroskopie bei ca. 700facher Vergrößerung gezeigt werden konnte.

Die Stabilität dieser Flüssigeinstellung bei einer Temperatur von -18°C, ± 0°C und +7°C ist hervorragend.

## Patentansprüche

1. Farbstoffpräparationen, enthaltend 1 bis 50 Gew.-%, bezogen auf das Gewicht der Präparation, des Farbstoffs der Formel 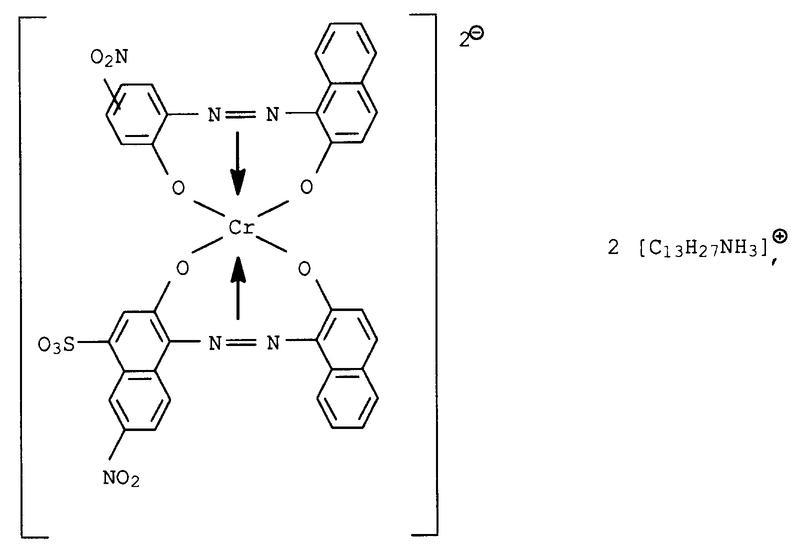 0,1 bis 10 Gew.-%, bezogen auf das Gewicht der Präparation, eines oder mehrerer primärer, sekundärer oder tertiärer aliphatischer Amine und 40 bis 98,9 Gew.-%, bezogen auf das Gewicht der Präparation, an Ethanol.

2. Farbstoffpräparationen nach Anspruch 1, enthaltend ein Amin, das mindestens 8 Kohlenstoffatome im Molekül aufweist.

3. Verwendung der Farbstoffpräparationen gemäß Anspruch 1 im Ink-Jet-Verfahren.
